# EUROPEAN PATENT SPECIFICATION

(11) **EP 4 247 723 B1**
(45) Date of publication and mention of the grant of the patent: **22.04.2026**
(21) Application number: 21819780.4
(22) Date of filing: 23.11.2021
(51) Int. Cl.: B65D 25/36, B65D 1/26, B65D 85/72, B29C 51/00

(54) **PET CUP CONTAINERS AND PROCESS OF MAKING THE SAME**
PET-BEHÄLTER UND VERFAHREN ZUR HERSTELLUNG
RÉCIPIENTS EN PET ET PROCÉDÉ DE FABRICATION

(30) Priority: 23.11.2020 US 202063117370 P
(43) Date of publication of application: 27.09.2023
(73) Proprietor: Compagnie Gervais Danone, 75009 Paris (FR); Société Anonyme des Eaux Minérales d'Evian et en Abrégé "S.A.E.M.E", 74500 Evian-les-Bains (FR)
(72) Inventor: MARTINO, Veronica, 74200 Thonon-les-Bains (FR); CHIVRAC, Frédéric, 92120 Montrouge (FR)
(74) Representative: Novagraaf Technologies
(86) International application number: PCT/EP2021/082699
(87) International publication number: WO 2022/106725

(56) References cited:
- EP-A1- 3 205 593
- EP-A1- 3 299 309
- DE-U1- 202010 008 367
- ES-B1- 2 391 515
- US-A1- 2016 332 767

## Description

The invention concerns cup containers made with PET, preferably recycled PET. The cup containers present good mechanical properties and processability.

Polyethylene terephtalate (PET) is widely used for packaging, especially for bottles. PET is a material of interest for its high recyclability.

PET recycled by mechanical routes (rPET) is known. This material has been used in bottles containers usually mixed with virgin PET. Some bottles made with 100% of rPET have also been commercialized. Using recycled PET allows a preservation of the environment. Various grades of rPET are available on the market, for use as raw material to make plastic objects. Flake grade rPET is less pure and comprise significant amounts in number and/or size of particles of other materials. Pellet grade rPET is purer and comprise less in number and/or size of particles of other materials. Purer pellet grades are more expensive.

Cup containers, for example yogurts cups, can be made by various processes such as injection blow molding, extrusion blow moldings, or thermoforming. Material used are typically polystyrene, polyethylene or polypropylene. Polystyrene is difficult to recycle. Cup containers made of PET have grown in interests because of PET's recyclability. Thermoformed containers made of PET have been launched. They however still contain a significant amount of plastic. Additionally, while well recyclable they are made of limited amounts of rPET and only with purer grades. There is a need for PET cup container with a better environmental impact, for example comprises of less plastic and/or more recycled PET, while presenting an acceptable technical and/or economic performance.

PET cup containers attached by 4 made according to Form Fill Seal process have for example been disclosed as "ClickPET" (https://www.plasticstoday.com/packaging/klckner-pentaplasts-new-pet-yogurt-packaging-snap). These are thick and present stickers on the body.

rPET cup containers have been disclosed (https://www.petnology.com/competence-online/news/sustainable-dairy-cups-made-from-100-rpet.html). The containers are thick and do not present any attached label or banderole.

Disposable cups in rPET for on the go beverages have been disclosed (https://www.alibaba.com/countrysearch/CN/rpet-cups.html). These are thick and do not present any attached label or banderole.

Cup containers made of PET and surrounded with a cupboard have been disclosed (https://www.optipack.de/en/technologies - Devo technology). The cups and the cupboard remain thick.

Document WO 2018/054550 describes cup containers made of a plastic material, having a bottom thickness of from 300 to 650 µm, and a side-wall covered by a banderole having a grammage of 110 g/m² to 140 g/m². The discloses as plastic material polystyrene (PS), polyethylene terephtalate (PET) or other materials. Thicknesses and details regarding PET are not disclosed and the banderole grammages, tested on polystyrene remain significant. There is a need cups presenting a better ecological footprint. EP3299309 A1 discloses a cup container according to the preamble of claim 1.

There is need for cup containers based on PET, that are recyclable and preferably recycled, comprising less plastics and/or more recycled plastic, while presenting good mechanical properties and good processability.

The invention addresses at least one of the problems or need above with a cup container (1) having the features of claim 1.

The invention also relates to a process of making such cup containers, comprising the steps of:
a) providing a plastic sheet in the plastic material,
b) thermoforming at least a part of the plastic sheet such that the thermoformed part comprises at least one zone wherein the local stretch ratio is of at least 4.0, preferably at least 4.5, preferably at least 5.0.

It has been found that the deep thermoformed cup containers present surprisingly good mechanical properties such as top load resistance, while presenting an improved environmental impact and a good economic performance. It has been found that satisfactory productivity can be achieved. The cup containers and/or the process to make them allow good mechanical properties such as compression resistance and/or good thickness profiles, and/or good homogeneity and/or control of thickness profiles and/or good other properties such as banderoles adhesion. It has been surprisingly found that this can be done with a good processability, allowing some flexibility in the setting of processing means and parameters such as thermoforming equipment's, materials and/or temperatures and speed.

It has been found that during deep thermoforming processes of PET sheets of thickness of about 1.2 mm, crystallization phenomenons occur with rPET, generating irregularities in the material, especially in the side wall, and/or generating some weaknesses as to mechanical properties or even as to permeability: crystallization points might generate small holes upon stretching. With such phenomenons the deep the cup container is and/or the deeper the thermoforming process is, the more difficult and sensitive it is. This can be all the more critical with lower purity rPET grades such as flake grade rPET. It has been surprisingly found that by associating a banderole to PET deep cup containers, according to the invention and/or the process of the invention, one can successfully overcome this, reducing the plastic thickness and/or lowering the thermoforming temperature and thereby avoid crystallization and negative consequences. Accordingly the PET cup containers present an improved ecological footprint, involving less plastic and/or more recycled plastic and less transformation energy.

The cup containers and/or processes of the invention can find further particular advantages with at least one of the following embodiments:
- the opening and the bottom define parallel plans in a horizontal direction, and the side wall connects the opening edge (7) and the bottom at a bottom edge (8);
- the side wall is a cylinder or a cone;
- the side wall has a substantially circular cross section in the horizontal direction;
- the mechanically recycled Polyethethylene Terephtalate (rPET) is a granule grade rPET, a flake grade rPET or mixture thereof;
- the PET comprises at least 50% by weight, preferably at least 75%, preferably at least 90%, optionally 100%, of a flake grade mechanically recycled Polyethethylene Terephtalate (rPET);
- the banderole is non heat shrinkable flexible material having a layer of paper material, plastic material, metal material or a combination thereof, and optionally at least a side layer of bonding material, a laquer material, or a combination thereof;
- the banderole is at least partially bonded to the side wall, preferably fully bonded to the side wall;
- the ratio between the surface of the opening and the surface of the bottom of from 1/1.2 to 1.5/1, preferably from 1.1 to 1.2/1;
- the thermoforming comprises a step of heating the plastic sheet to a temperature of less than 130°C, preferably from 115°C to 125°C;
- the banderole is placed into the mold before forcing the heated plastic material of the sheet into the mold.

### Brief description of the drawings

Figure 1a represents a top view with of a cup container according to the invention, sealed with a flexible lid.
Figure 1b represents a side view of a cup container according to the invention.
Figure 1c represents a bottom view of a cup container according to the invention.
Figure 2 represents a vertical cross section view of the cup container according to the invention.
Figure 3 represents a detailed view of the side wall of a cup container according to the invention.
Figure 4 represents various zones of cup containers according to the invention.
Figure 5 represents thickness profiles of cup containers according to the invention.
Figure 6 represents thickness profiles of cup containers according to the invention.

### Definitions

In the present application the "total stretch ratio" refers to the ratio between the surface of the cup container opening, corresponding to the thermoforming area of a sheet, and the surface of the developed thermoformed part, corresponding to the surface of the plastic in contact with a mold. The total stretch ratio can thus be measures directly on cup containers. It can be as well determined upon the process of making them.

In the present application a "deep" cup or thermoforming refers to cup containers and/to thermoforming processes with a total stretch ratio of least 4.0, preferably at least 4.5, preferably at least 5.0
In the present application the "local stretch ratio" or "local draw ratio" refers to the stretch ratio at a local zone of the thermoformed part. The local stretch ratio can be estimated by dividing the local thickness in the thermoformed part by the initial thickness before thermoforming. Non thermoformed parts, such as flanges, typically have this initial thickness.

In the present application "exterior" or "external" refers to the opposite direction of the hollow body of the container. In the present application "interior" or "internal" refers to the direction of the hollow body of the container.

### Cup container structure

The cup container of the invention comprises a thermoformed hollow body. The thermoformed hollow body has a total stretch ratio of at least 4.0, preferably at least 4.5, preferably at least 5.0. The total stretch ratio can of up to 7.0, preferably up to 6.0.

In one embodiment the hollow body comprises at least one zone wherein the local stretch ratio is of at least 4.3, preferably at least 4.5, preferably at least 5, preferably at least 6, preferably at least 7.

The cup container comprises a flange part that has not undergone any stretch, said part being considered herein as a non-thermoformed part. The cup container is obtained by a process comprising thermoforming a plastic sheet made of the plastic material.

Thermoforming is a process known by the one skilled in the art. It typically comprises stretching under heating a plastic material such as a sheet, typically by applying in a mold cavity mechanical means such as plugs and/or by aspiration from the mold. The mechanical means can optionally be enhanced by applying a gas under pressure. The stretching results in local stretch ratios in zones forming the hollow body. If the stretching is uniform the local stretch ratios are equal everywhere. As the stretching can be non-uniform, the hollow body can present various zones having different local stretch ratios.

The hollow body can have a thickness varying in a range of from 50 µm to 800 µm, preferably from 60 µm to 750 µm, preferably from 70 µm to 500 µm.

The cup container is thermoformed from a sheet having a thickness of at most 1.0 mm, preferably at most 0.90 mm, preferably 0.80 mm. Preferably the thickness of the" sheet is of at least 0.3 mm, preferably at least 0.5 mm, preferably at least 0.6 mm. For example, the thickness of the sheet is of from 0.6 mm to 1.0 mm, for example form 0.6 mm to 0.65 mm, or from more than 0.65 mm to 0.75mm, or from 0.75 mm to 0.85 mm or from 0.85 mm to 0.95 mm or from 0.95 mm to 1.0 mm. The flange has a thickness e of at most 1.0 mm, preferably at most 0.90 mm, preferably 0.80 mm. Preferably the thickness e of the flange is of at least 0.3 mm, preferably at least 0.5 mm, preferably at least 0.6 mm. For example, the thickness e of the flange is of from 0.6 mm to 1.0 mm, for example form 0.6 mm to 0.65 mm, or from more than 0.65 mm to 0.75mm, or from 0.75 mm to 0.85 mm or from 0.85 mm to 0.95 mm or from 0.95 mm to 1.0 mm.

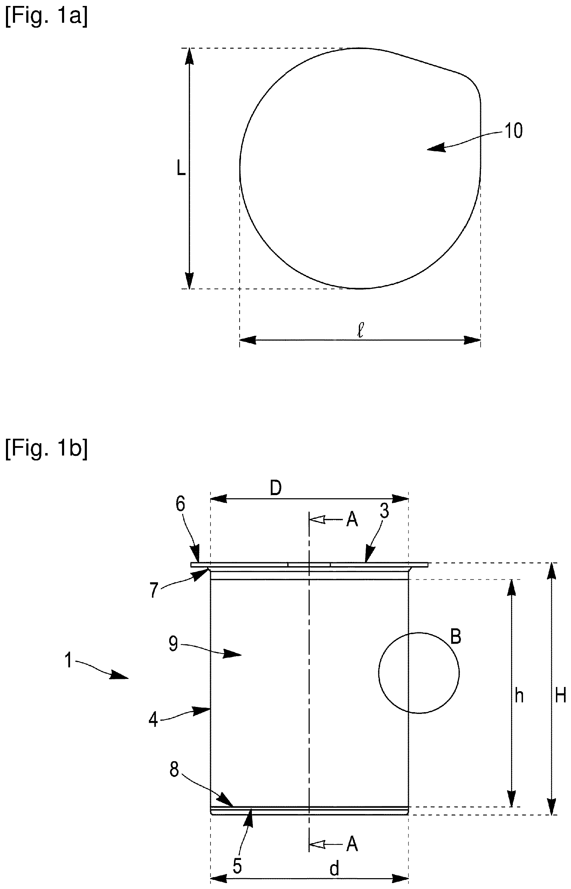

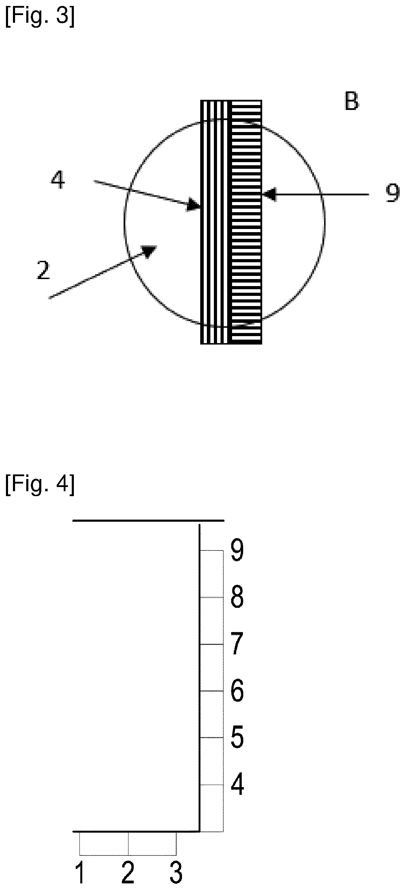

Referring to Figure 1b, it is shown a cup container 1 in a side view. This is typically in a vertical direction. The cup container 1 has a thermoformed hollow body 2, not represented on figure 1a, as it is behind a side wall. The cup container has an opening 3, a side wall 4 and a bottom 5. Together they defined the hollow body of the cup container. The bottom typically defines a horizontal direction, for the cup container to stand. The opening 3 is opposite to the bottom 5. The opening 3 typically defines a plan parallel to the bottom 5, typically in a horizontal direction. The side wall 4 connects the opening 3 to the bottom 5. The cup container 1 has a peripheral flange 6 extending outwardly from the opening 3. In one embodiment the flange extends all around the opening 3. In one embodiment the flange 6 partly extends around the opening 3. The outward extension is preferably in a direction parallel to the opening 3 and the bottom 5, typically in a substantially horizontal direction. The flange 6 forms an opening edge 7 with the side wall 4. The edge 7 marks the outward peripheral extension. The bottom 5 and the side wall 4 form together a bottom edge 8. The flange and the container body are integral. It means that they constitute a single piece of plastic material. The cup container 1 is provided by a banderole 9 substantially covering the side wall, on the external side of the side wall. There is thus at the side wall 4, an internal layer of the plastic material and an external layer of the banderole. This arrangement is depicted on Figure 3.

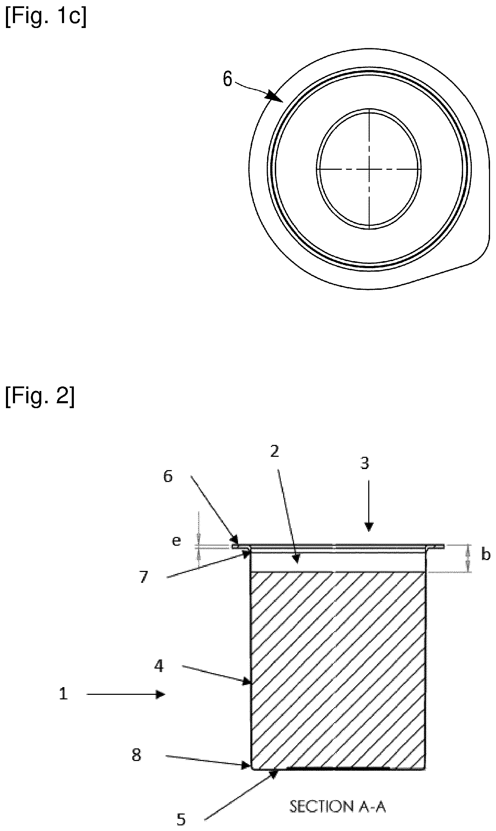

The banderole 9, at the bottom end, substantially extends to the bottom edge 8. For example, at this end the banderole 9 leaves the side wall uncovered on at most 10% of the side wall's length, preferably at most 5%, for example at most 1%. The banderole 9, at the bottom end, substantially extends to the opening edge 7. For example, at this end the banderole 9 leaves the side wall 4 uncovered on at most 10% of the side wall's length, preferably at most 5%, for example at most 1%. The side wall 4 as depicted is a vertical cylinder, having a circular cross section, as figure 1c shows. The minimum side wall has a line of minimum length between the bottom edge and the opening edge. The side wall length along this line is referred as to dimension H. The banderole length along the same line is referred to as dimension h. In one embodiment h ≥0.80 H, preferably h ≥0.90 H, for example h ≥0.99 H. In one embodiment the surface of side wall covered by the banderole of at least 90% of the total surface of the side wall, preferably at least 95%, for example at least 99%.

The opening can be of various shapes in the horizontal direction, such a circular shape, oval shape, square shape, optionally with rounded corners etc... The bottom can be of various shapes in the horizontal direction, such a circular shape, oval shape, square shape, optionally with rounded corners etc... In one embodiment the opening and the bottom have similar shapes, centered on a same symmetry axis. In one embodiment the side wall is a cylinder or a cone. In one embodiment the side wall has a substantially circular cross section in the horizontal direction. Thus, the side wall can be a circular cylinder or a circular cone for example.

The opening of the represented cup container is circular. The opening edge of the represented cup container is circular. Where the cup containers comprise symmetry plans in the vertical direction, the lowest dimension between opposite points at the opening or opening edge in such a symmetry plan is referred to as dimension D. Where the opening or opening edge is circular D is the diameter. The bottom of the represented cup container is circular. The bottom edge of the represented cup container is circular. Where the cup container comprises symmetry plans in the vertical direction, the lowest dimension between opposite points at the bottom or bottom edge in such a symmetry plan is referred to as dimension d. Where the bottom or bottom edge is circular d is the diameter.

In one embodiment d and D have substantially the same size. In one embodiment D>d, with the body of the cup container tapering from the opening to the bottom. In one embodiment D<d, with the body of the cup container tapering from the bottom to the opening.

The hollow body of the cup container is deep, corresponding to deep thermoforming and to a high total stretch ratio. Preferably the opening is larger than the hollow body's length. In one embodiment H/D>1.0, preferably H/D>1.1, preferably H/D>1.2. In one embodiment H/d>1.0, preferably H/d>1.1, preferably H/d>1.2.

Referring to Figure 1c, it is shown a bottom view of the cup container. The flange 6 clearly appears extending outwardly form the circular opening.

Referring to Figure 1a, it is shown a tip view of the cup container. The flange and the opening are sealed with a flexible lid 10.

Referring to Figure 2, it is shown a cross section of the cup container depicted on figures 1a, 1b and 1c. The hollow body 2 extends from the opening 3 to the bottom 8, in the side wall 4. A content of the cup container is represented as hatches. Here the hollow body is not fully filled with a content, leaving a head space along a height b. The flange has a thickness e.

### Plastic material structure

The plastic material is typically a quite thin piece of plastic. It can have a single layer structure or a multi-layers structure, for example a bi-layer structure, a tri layer structure etc. At least one of the layer, preferably all layers are made of a PET polymer. The material can have the density or PET. In one embodiment at least one of the layers is a foam layer of a PET, presenting a lower density due to the presence of some gas inclusions.

### Plastic Material

The hollow body and the flange of the cup container are made of a PET plastic material. PET and rPET are for example available in various grades or compositions, for example packaging grades or compositions. rPET is known and commercially available. In an embodiment it has been recycled by post-consumer (PC) recycling, where the container is recycled from waste streams after use by a consumer and disposal by a user or consumer. The recycling typically involves sorting waste streams, to recover a stream of the selected material, and processing the stream with steps such as refining, washing and/or grinding. For example, PET can be sorted from waste streams, and then processed according to various routes. The mechanical route involves refining, washing and/or grinding to recover a rPET polymer material. The rPET polymer is comprised of PET polymer but also contain particles of other materials that have not been completely removed in the previous steps.

The rPET polymer material can be made available and used in various grades such a flake grade and pellet grade. Flake grade refers to a rPET polymer that is obtained without a step of re-melting and filtering off particles. Pellet grade refers to a rPET polymer that has undergone a step of extraction involving re-melting, filtering off particles, and extruding to obtain pellets. Flake grade rPET is less pure and comprises significant amounts in number and/or size of particles of other materials. Pellet grade rPET is purer and comprises less in number and/or size of particles of other materials. Pellet grade rPET is more expensive than flake grade rPET.

It is mentioned that the recovered rPET polymer can be subjected to a solid-state polymerization to re-increase its molecular weight, for example to re-increase its Intrinsic Viscosity (IV). The unwanted coloration of post-consumer rPET is significantly much higher than rPET obtained by post-industrial recycling where clean articles or parts of articles are recycled from production sites. The later are high purity streams, with lower amounts of impurities coming.

The PET can for example be a 100% recycled PET (rPET), or comprise an amount of R% by weight of rPET and an amount of 100-R% of a virgin PET, wherein R is of at least 50% or at least 60% or at least 70%, or at least 80%, or at least 90%.

The PET material preferably comprises at least 50% by weight of a PET recycled by a mechanical route (rPET). The rest of the PET can virgin PET, prepared for monomers, and or PET recycled by chemical or microbiological routes. For example, the PET material comprises at least 50%, preferably at least 80%; by weight of rPET and at most 50%, preferably at most 20%, by weight of virgin PET and/or PET recycled by chemical or microbiological routes.

In one embodiment the PET is a mixture of rPET and virgin PET. The mixture can be implemented as several layers, or by mixing pellets of rPET and virgin PET, before or upon melting for forming the container or a preform, or by mixing and melting rPET and virgin PET for forming pellets. Such mixtures or mixing procedures are known by the one skilled in the art.

In one embodiment the PET essentially consists of the recycled PET. In other words, the plastic material is a 100% by weight rPET.

In one embodiment the rPET is a flake grade rPET. In one embodiment the rPET is a pellet grade PET. In one embodiment the rPET is a mixture of flake grade rPET and pellet grade rPET.

In one embodiment the PET essentially consists of a pellet grade rPET. In other words, the plastic material is a 100% by weight pellet grade rPET. In one embodiment the PET essentially consists of a flake grade rPET. In other words, the plastic material is a 100% by weight flake grade rPET.

It is mentioned that PET (either virgin PET or rPET) is recyclable, for example by the mechanical route, a chemical route and/or a microbiological route. The chemical route involves depolymerizing to recover monomers. The monomers can be re-polymerized to obtain a recycled fresh polymer. For example, PET or rPET can be depolymerized by hydrolysis, methanolysis, glycloysis, ammonolysis or aminolysis to obtain recycled terephthalic acid or a diester thereof and recycled monoethylene glycol. The recycled terephthalic acid or diester and/or the recycled monoethylene glycol can be repolymerized, optionally with adding some virgin terephthalic acid or diester and/or the monoethylene glycol. Similarly, the microbiological route involves treating the stream of material by micro-organisms to obtain depolymerized oligomers or monomers, and then repolymerizing said monomers or oligomers, optionally with adding some virgin monomers or oligomers.
The PET can comprise some additives, known by the one skilled in the art, such as stabilizers, lubricants etc... In one embodiment the PET material is substantially free of mineral particles such as fillers or opacifiers, for example TiO₂ particles. In one embodiment the PET material is substantially free of mineral particles added into the rPET, such as fillers or opacifiers, for example TiO2 particles.

### Banderole

Banderoles are known by the one skilled in the art. They are typically in a flexible thin material. They are typically a non heat shrinkable flexible material, as opposed for example to heat shrinkable plastic films such shrink wraps, having a layer of paper material, plastic material, metal material or a combination thereof. The banderoles can comprise at least a side layer of bonding material, a laquer material, or a combination thereof. The bonding material, on the internal side of the banderole can provide some adhesion to the side wall. The bonding can be generated by heat, for example by the temperature of the side wall upon forming. Such a bonding material is also referred to as "hotmelt". The banderoles can thus be at least partially bonded to the side wall, preferably fully bonded to the side wall.

Examples of banderole materials include the following:
- overlacquer / paper / hotmelt
- Polypropylene / paper / hotmelt
- overlacquer /Oriented Polystyrene / hotmelt
- Polypropylene / hotmelt
- PET / hotmelt
- PETg/ hotmelt
- PET foam / hotmelt.

The banderoles has a grammage of 95 g/m². These are found to provide good mechanical properties as well as good environmental and/or economic performances.

### Thermoforming

The cup container is made by a process comprising the steps of:
a) providing a plastic sheet in the plastic material,
b) thermoforming at least a part of the plastic sheet such that the thermoformed part comprises at least one zone wherein the local stretch ratio is of at least 4.0, preferably at least 4.5, preferably at least 5.0.

The thermoforming is such that thermoformed part comprises at least one zone wherein the local stretch ratio is of at least 4.2, preferably at least 4.5, preferably at least 5, preferably at least 6, preferably at least 7.

Plastic sheets adapted for thermoforming can be obtained for example by extrusion of the plastic material. One can implement appropriate treatments after the extrusion to obtain the sheet. Treatment steps are for example press treatments, calendering, stretching etc... Parameters of these treatment steps such as temperatures, pressure, speed, number of treatments can be adapted to obtain the sheet. In one embodiment the sheet is prepared by a process involving extruding or co-extruding and calendering. Treatments can provide some orientation to the sheet. The sheet can be slightly mono-oriented. Typically the sheet is not a bi-oriented sheet or film.

The thermoforming step typically comprise a step of heating the plastic the sheet, and a step of forcing the heated plastic material of the sheet into a mold. This can be performed by applying in a mold cavity mechanical means such as plugs and/or by aspiration from the mold. The mechanical means can optionally be enhanced by applying a gas under pressure. In one embodiment the thermoforming comprises a step of heating the plastic sheet to a temperature of less than 130°C, preferably from 115°C to 125°C.

The banderole is preferably associated to the side wall by placing it in the mold before forcing, by thermoforming, the heated plastic material of the sheet into a mold.

The cup containers may be for example made thanks to a Form Fill Seal thermoforming line. The thermoforming can present the following steps:
- sheet introduction on guide chains (i.e. spike or jaws);
- sheet heating, by heating contact plates;
- forming thanks to a negative mold, assisted by forming plugs and air pressure. The mold comprises the banderole.

In a Form Fill Seal thermoforming line, one typically performs the following steps after the thermoforming:
- the resulting forms are filled with a product, and then, thermosealed with a lid film,
- finally, they are cut and optionally precut by one or several mechanical and/or optical trimming tool(s).

### Uses of the cup containers and content

The cup container is typically used to package a content, for example a food or beverage content or a non-food or non-beverage content. The content can be for example a dairy product or a plant-based alternative to a dairy product. The cup containers may be sealed after filling with a content, for example with a flexible or non-flexible lid 10.

The cup container can be for example a container of 50 ml (or 50 g) to 1 L (or 1 kg), for example a container of 50 ml (or 50 g) to 80 ml (or 80 g), or 80 ml (or 80 g) to 100 ml (or 100g), or 100 ml (or 100 g) to 125 ml (or 125 g), or 125 ml (or 125 g) to 150 ml (or 150 g), or 150 ml (or 150 g) to 200 ml (or 200 g), or 200 ml (or 200 g) to 250 ml (or 250 g), or 250 ml (or 250 g) to 300 ml (or 300 g), or 300 ml (or 300 g) to 500 ml (or 500 g), or 500 ml (or 500 g) to 750 ml (or 750 g), or 750 ml (or 750 g) to 1 L (or 1kg).

Some further details or advantage of the invention may appear in view of the following non limiting example(s).

### Example 1

This example is implemented with using the following materials:
- Monolayer plastic sheet having a thickness of 0.70 mm, made of 100% CleanPET^{®} FK (marketed by Recypet AG), which is mechanically recycled rPET flakes.
- Banderole: paper-based complex having a thickness of about 100 µm and a weight of about 95g/m².

The plastic sheet is thermoformed into yogurt cups according to the procedure below. The cups are then analyzed and evaluated.

### Procedure:

The sheet is introduced into a F.F.S. thermoforming line and is then thermoformed in 125 g cups with the following parameters:
- Heating plates temperatures: 125°C;
- The thermoforming step is performed with conventional felt forming plugs;
- Mold temperature is fixed at 40°C to activate the label hot melt and to cool down the rPET material;
- Forming air pressure: 4.5 bars;
- Blowing time: 800 ms
- Machine speed: 32 strokes per minute.
- Distance between bottom of mold and plug at lowest point: 5 mm
- Shape: As shown on the figures. The total stretching ratio is 5.6.
- Banderole: a full banderole, as shown on the figures, is applied in the mold.

The yogurt cups 1 are arranged in a pack of 4 attached cups in two rows (the pack being also referred to as a "multipack") and are cut into x4 attached cups (referred to as "multipack"), with a precut line or similar junction between each pair of adjacent cups amongst the four cups. The precut lines 15 are performed on the F.F.S. equipment.

### Top Load evaluation

Yogurt cups mechanical performances are determined by compression tests referred as Top Load. The Top Load value is evaluated according to the following protocol:
- Use of a tensile/compression test machine type ADAMEL LHOMARGY DY 34
- Apply compression on cups (by 4 cups) with a speed of 10mm/min at ambient temperature
- Evaluate top load value as: maximum of compression curve.

A first deformation at the bottom at a top load of 20.6 daN, a second one is observed at the side wall at a top load of 73.3 daN.

The cup obtained have a high thermoforming deepness with a good mechanical performance despite the very low thickness, the high amount of rPET and the flake grade rPET used.

### Example 2

This example is implemented with using the following materials:
- Monolayer plastic sheet having a thickness of 0.70 mm, made of 100% Novapet CR (marketed by Novapet), which is virgin PET.
- Monolayer plastic sheet having a thickness of 0.75 mm, made of 100% Novapet CR (marketed by Novapet), which is virgin PET.
- Banderole: paper-based complex having a thickness of about 100 µm and a weight of about 95g/m².

The plastic sheets are thermoformed into yogurt cups according to the procedure described in Example 1, except the blowing time being of 850 ms.

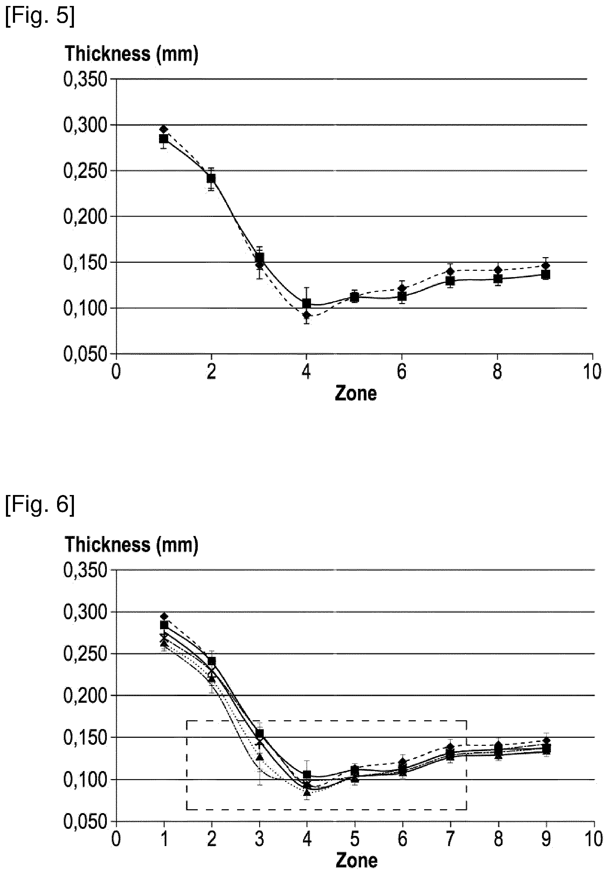

For the two different sheets, the plastic thicknesses in various zones of the cups represented on Figure 4 are measured and reported on figure 5, where squares report thicknesses for the sheet having a thickness of 0.70 mm, and diamond report thicknesses for the sheet having a thickness of 0.75 mm.

### Top load evaluations are performed as described in Example 1

The sheet having a thickness of 0.70 mm presents a first deformation at the bottom at a top load of 23.0 daN, a second one is observed at the side wall at a top load of 74.5 daN.

The sheet having a thickness of 0.75 mm presents a first deformation at the bottom at a top load of 24.3 daN, a second one is observed at the side wall at a top load of 72.5 daN.

This shows that very good resistance is obtained with light banderoles and thin virgin PET bodies of less than 300 µm.

### Example 3

This example is implemented with using the following materials:
- Monolayer plastic sheets having a thickness of 0.70 mm or 0.75 mm, made of 100% mechanically recycled rPET flakes, or mixtures of 50% mechanically recycled rPET flakes and 50% virgin PET.
- Banderole: paper-based complex having a thickness of about 100 µm and a weight of about 95g/m².

The plastic sheets are thermoformed into yogurt cups according to the procedure described in Example 1, except the blowing time being of 850 ms.

For the different sheets, the plastic thicknesses in various zones of the cups represented on Figure 4 are measured and reported on figure 6.

### Top load evaluations are performed as described in Example 1

All the sheets presents a first deformation at the bottom at a top load of higher than 20.0 daN, a second one is observed at the side wall at a top load of higher than 70.0 daN.

This shows that very good resistance is obtained with light banderoles and thin PET bodies (100% rPET flakes or 50% rPET flakes mixed with 50% virgin PET) of less than 300 µm.

## Claims

1. A cup container (1) having:
- a thermoformed hollow body (2), made of a plastic material being a Polyethylene Terephtalate (PET), defined by an opening (3), a side wall (4) and in a horizontal direction a bottom (5) opposite to the opening,
- a flange (6) outwardly peripheral to the opening (3), forming an opening edge (7) with the side wall (4), integral with the body (2), and
- an external banderole (9) positioned at the side wall (4),
wherein:
- the flange has a thickness of at most 1.0 mm, preferably at most 0.90 mm, preferably 0.80 mm,
- the body (2) has a total stretch ratio of at least 4.0, preferably at least 4.5, preferably at least 5.0,
and
- the banderole (9) covers at least 80% of the side wall, **characterized in that**:
- the PET comprises at least 50% by weight, preferably at least 75%, preferably at least 90%, optionally 100%, of a recycled Polyethethylene Terephtalate (rPET), preferably a mechanically rPET, and
- the banderole (9) has a thickness of about 100 µm and a grammage of about 95 g/m².

2. A cup container according to claim 1, wherein the opening and the bottom define parallel plans in a horizontal direction, and the side wall connects the opening edge (7) and the bottom at a bottom edge (8).

3. A cup container according to any the preceding claims, wherein the side wall is a cylinder or a cone.

4. A cup container according to any of the preceding claims, wherein the side wall has a substantially circular cross section in the horizontal direction.

5. A cup container according to any of the preceding claims, wherein the mechanically recycled Polyethethylene Terephtalate (rPET) is a granule grade rPET, a flake grade rPET, or mixture thereof.

6. A cup container according to any of the preceding claims, wherein the PET comprises at least 50% by weight, preferably at least 75%, preferably at least 90%, optionally 100%, of a flake grade mechanically recycled Polyethethylene Terephtalate (rPET).

7. A cup container according to any of the preceding claims, wherein the banderole is non heat shrinkable flexible material having a layer of paper material, plastic material, metal material or a combination thereof, and optionally at least a side layer of a bonding material, a laquer material, or a combination thereof.

8. A cup container according to any of the preceding claims, wherein the banderole is at least partially bonded to the side wall, preferably fully bonded to the side wall.

9. A cup container according to any of the preceding claims, having a ratio between the surface of the opening and the surface of the bottom of from 1/1.2 to 1.5/1, preferably from 1.1 to 1.2/1.

10. A process of making a cup container according to any of the preceding claims, comprising the steps of:
a) providing a plastic sheet in the plastic material,
b) thermoforming at least a part of the plastic sheet such that the thermoformed part comprises at least one zone wherein the local stretch ratio is of at least 4.0, preferably at least 4.5, preferably at least 5.0.

11. A process according to claim 10, wherein the thermoforming comprises a step of heating the plastic sheet to a temperature of less than 130°C, preferably from 115°C to 125°C.

12. A process according to claim 11, wherein the banderole is placed into the mold before forcing the heated plastic material of the sheet into the mold.

## Patentansprüche

1. Becherbehälter (1) mit:
- einen thermogeformten Hohlkörper (2) aus einem aus Polyethylenterephthalat (PET) bestehenden Kunststoffmaterial, der durch eine Öffnung (3), eine Seitenwand (4) und in horizontaler Richtung einen der Öffnung gegenüberliegenden Boden (5) begrenzt ist,
- einem Flansch (6), der die Öffnung (3) nach außen umgibt, mit der Seitenwand (4) eine Öffnungskante (7) bildet und einstückig mit dem Körper (2) ausgebildet ist, und
- einer an der Seitenwand (4) angeordnete äußere Banderole (9),
wobei:
- der Flansch eine Dicke von höchstens 1,0 mm, vorzugsweise höchstens 0,90 mm, vorzugsweise 0,80 mm, aufweist,
- der Körper (2) weist ein Gesamtdehnungsverhältnis von mindestens 4,0, vorzugsweise mindestens 4,5, vorzugsweise mindestens 5,0 auf,
und
- die Banderole (9) bedeckt mindestens 80 % der Seitenwand, **dadurch gekennzeichnet, dass**:
- das PET mindestens 50 Gew.-%, vorzugsweise mindestens 75 %, vorzugsweise mindestens 90 %, gegebenenfalls 100 %, eines recycelten Polyethylenterephthalats (rPET), vorzugsweise eines mechanisch recycelten rPET, umfasst, und
- die Banderole (9) eine Dicke von etwa 100 µm und ein Flächengewicht von etwa 95 g/m² aufweist.

2. Becherbehälter nach Anspruch 1, wobei die Öffnung und der Boden in horizontaler Richtung parallele Ebenen definieren und die Seitenwand die Öffnungskante (7) und den Boden an einer Unterkante (8) verbindet.

3. Becherbehälter nach einem der vorstehenden Ansprüche, wobei die Seitenwand ein Zylinder oder ein Kegel ist.

4. Becherbehälter nach einem der vorstehenden Ansprüche, wobei die Seitenwand in horizontaler Richtung einen im Wesentlichen kreisförmigen Querschnitt aufweist.

5. Becherbehälter nach einem der vorstehenden Ansprüche, wobei das mechanisch recycelte Polyethylenterephthalat (rPET) ein rPET in Granulatform, ein rPET in Flockenform oder eine Mischung davon ist.

6. Becherbehälter nach einem der vorstehenden Ansprüche, wobei das PET mindestens 50 Gew.-%, vorzugsweise mindestens 75 %, vorzugsweise mindestens 90 %, gegebenenfalls 100 %, eines mechanisch recycelten Polyethylenterephthalats (rPET) in Flockenform umfasst.

7. Becherbehälter nach einem der vorstehenden Ansprüche, wobei die Banderole ein nicht wärmeschrumpfbares, flexibles Material ist, das eine Schicht aus Papiermaterial, Kunststoffmaterial, Metallmaterial oder einer Kombination davon aufweist, und optional mindestens eine Seitenschicht aus einem Bindematerial, einem Lackmaterial oder einer Kombination davon aufweist.

8. Becherbehälter nach einem der vorstehenden Ansprüche, wobei die Banderole zumindest teilweise mit der Seitenwand verbunden ist, vorzugsweise vollständig mit der Seitenwand verbunden ist.

9. Becherbehälter nach einem der vorstehenden Ansprüche, mit einem Verhältnis zwischen der Fläche der Öffnung und der Fläche des Bodens von 1/1,2 bis 1,5/1, vorzugsweise von 1,1 bis 1,2/1.

10. Verfahren zur Herstellung eines Becherbehälters nach einem der vorstehenden Ansprüche, umfassend die folgenden Schritte:
a) Bereitstellen einer Kunststofffolie aus dem Kunststoffmaterial,
b) Thermoformen mindestens eines Teils der Kunststofffolie, so dass der thermogeformte Teil mindestens eine Zone aufweist, in der das lokale Dehnungsverhältnis mindestens 4,0, vorzugsweise mindestens 4,5, vorzugsweise mindestens 5,0 beträgt.

11. Verfahren nach Anspruch 10, wobei das Thermoformen einen Schritt des Erhitzens der Kunststofffolie auf eine Temperatur von weniger als 130 °C, vorzugsweise von 115 °C bis 125 °C, umfasst.

12. Verfahren nach Anspruch 11, wobei die Banderole in die Form eingelegt wird, bevor das erhitzte Kunststoffmaterial der Folie in die Form gepresst wird.

## Revendications

1. Récipient en forme de gobelet (1) comprenant :
- un corps creux thermoformé (2), fabriqué à partir d'une matière plastique étant du polyéthylène téréphtalate (PET), défini par une ouverture (3), une paroi latérale (4) et, dans une direction horizontale, un fond (5) opposé à l'ouverture,
- une collerette (6) périphérique à l'extérieur de l'ouverture (3), formant un bord d'ouverture (7) avec la paroi latérale (4), solidaire du corps (2), et
- une banderole externe (9) positionnée au niveau de la paroi latérale (4),
dans lequel :
- la collerette a une épaisseur d'au plus 1,0 mm, de préférence d'au plus 0,90 mm, de préférence de 0,80 mm,
- le corps (2) a un rapport d'étirement total d'au moins 4,0, de préférence d'au moins 4,5, de préférence d'au moins 5,0,
et
- la banderole (9) recouvre au moins 80 % de la paroi latérale, **caractérisé en ce que** :
- le PET comprend au moins 50 % en poids, de préférence au moins 75 %, de préférence au moins 90 %, éventuellement 100 %, d'un polyéthylène téréphtalate recyclé (rPET), de préférence un rPET mécanique, et
- la banderole (9) a une épaisseur d'environ 100 µm et un grammage d'environ 95 g/m².

2. Récipient en forme de gobelet selon la revendication 1, dans lequel l'ouverture et le fond définissent des plans parallèles dans une direction horizontale, et la paroi latérale relie le bord d'ouverture (7) et le fond au niveau d'un bord inférieur (8).

3. Récipient en forme de gobelet selon l'une quelconque des revendications précédentes, dans lequel la paroi latérale est un cylindre ou un cône.

4. Récipient en forme de gobelet selon l'une quelconque des revendications précédentes, dans lequel la paroi latérale a une section transversale sensiblement circulaire dans la direction horizontale.

5. Récipient en forme de gobelet selon l'une quelconque des revendications précédentes, dans lequel le polyéthylène téréphtalate recyclé (rPET) mécaniquement est un rPET de qualité granulaire, un rPET de qualité floconneuse ou un mélange de ceux-ci.

6. Récipient en forme de gobelet selon l'une quelconque des revendications précédentes, dans lequel le PET comprend au moins 50 % en poids, de préférence au moins 75 %, de préférence au moins 90 %, éventuellement 100 %, de polyéthylène téréphtalate recyclé (rPET) mécaniquement de qualité floconneuse.

7. Récipient en forme de gobelet selon l'une quelconque des revendications précédentes, dans lequel la banderole est un matériau flexible non thermorétractable comportant une couche de matériau en papier, en plastique, en métal ou une combinaison de ceux-ci, et éventuellement au moins une couche latérale d'un matériau de liaison, d'un matériau laqué ou d'une combinaison de ceux-ci.

8. Récipient en forme de gobelet selon l'une quelconque des revendications précédentes, dans lequel la banderole est au moins partiellement liée à la paroi latérale, de préférence entièrement liée à la paroi latérale.

9. Récipient en forme de gobelet selon l'une quelconque des revendications précédentes, ayant un rapport entre la surface de l'ouverture et la surface du fond compris entre 1/1,2 et 1,5/1, de préférence entre 1,1 et 1,2/1.

10. Procédé de fabrication d'un récipient en forme de gobelet selon l'une quelconque des revendications précédentes, comprenant les étapes suivantes :
a) fournir une feuille de matière plastique dans la matière plastique,
b) thermoformer au moins une partie de la feuille de matière plastique de telle sorte que la partie thermoformée comprenne au moins une zone dans laquelle le rapport d'étirement local est d'au moins 4,0, de préférence d'au moins 4,5, de préférence d'au moins 5,0.

11. Procédé selon la revendication 10, dans lequel le thermoformage comprend une étape consistant à chauffer la feuille de matière plastique à une température inférieure à 130°C, de préférence de 115°C à 125 °C.

12. Procédé selon la revendication 11, dans lequel la banderole est placée dans le moule avant de forcer le matériau plastique chauffé de la feuille dans le moule.
